# EUROPEAN PATENT APPLICATION

(11) **EP 1 537 910 A1**
(43) Date of publication of application: **08.06.2005**
(21) Application number: 04026775.9
(22) Date of filing: 11.11.2004
(51) Int. Cl.: B01J 19/00, B01L 11/00, B41M 3/00, B05D 1/28

(54) **Method and apparatus for forming a chemical gradient on a substrate**

(30) Priority: 05.12.2003 EP 03405867
(71) Applicant: International Business Machines Corporation, Armonk, N.Y. 10504 (US)
(72) Inventor: Wolf, Heiko, 8808 Pfäffikon (CH); Schmid, Heinz, 8820 Wädenswil (CH); Stutz, Richard, 5606 Dottikon (CH); Balmer, Tobias, 8005 Zurich (CH)
(74) Representative: Klett, Peter Michael

(57) **Abstract**

The present invention provides a method of forming a chemical gradient on a substrate (12) comprising the steps of: providing a printing device (10) comprising a body for holding at least one active molecular ink within a body volume of the body, wherein the body comprises a contact surface (18) and the dimension of the body volume transverse to the contact surface (18) is variable; and contacting the printing device (10) with the substrate (12). The present invention also provides an apparatus for forming a chemical gradient.

## Description

### FIELD OF THE INVENTION

The present invention relates to a method and apparatus for forming a chemical gradient on a substrate. In particular, the present invention relates to a method and an apparatus for forming a chemical gradient in a self-assembled monolayer on a substrate wherein the chemical gradient is formed by way of a simple printing or micro-printing process.

### BACKGROUND

Self-assembled monolayers are molecular assemblies which are formed spontaneously by the contact of an appropriate substrate with a solution of an active molecule in an appropriate solvent. The active molecule typically comprises at one end a surface group whilst at the other end there is an anchoring group which specifically interacts with the substrate so as to anchor the active molecule onto the substrate. Typically, the active molecule further comprises a spacer group between the surface group and the anchoring group.

Chemical gradients on surfaces usually manifest themselves as wetting gradients although gradients with different chemical compositions but similar wetting behavior are possible. Such surface gradients in wetting or chemical composition are important in the study of biological adhesion phenomena e.g cell adhesion, biofouling or tribological effects.

The currently known method of producing or fabricating a chemical gradient on a surface of a substrate is typically by way of diffusion through the gas phase or a gel. In the latter method, a molecule can form a self-assembled monolayer on a substrate which diffuses from one side of the substrate whilst another compound diffuses from the other side of the substrate. An example of a two component chemical gradient formed by diffusion through a gel is described in Liedberg and Tengvall, Langmuir 11(1995), 3821 An example of a chemical gradient formed by diffusion through the gas phase is described in Chaudhury and Whitesides, Science 256 (1992), 1539.

The problem with these methods of fabricating a chemical gradient is that they are difficult to control and reproduce which thus minimises useful applications of these methods such as in biosensors, biochips, diagnostic kits used in the biotechnology and/or the pharmaceutical industry.

In order to ensure that those methods are reproducible, one technique is to use sophisticated equipment which controls the pressure and temperature of the environment surrounding the substrate. Another solution, described in Morgenthaler et al., Langmuir ASAP articles (2003), is to use a motor controlled dipping process of the substrate into a diluted solution. By controlling the speed and acceleration of the motor, linear chemical gradients of cm extensions of one compound are able to be produced. The whole substrate is then immersed into the solution of another monolayer forming compound which can now occupy the surface not taken by the first monolayer forming compound. In this technique, chemical gradients are able to be produced.

However, a problem with the use of these methods is that it is difficult to produce chemical gradients in the mm-range or smaller due to meniscus effects in the dipping process. Further, the motor controlled dipping process only produces chemical gradients of linear geometry. Still further, the use of sophisticated equipment to control the pressure and temperature of the environment surrounding the substrate incurs substantial costs in expense and time and a simple, cost-effective method would be more desirable.

Accordingly it is an object of the present invention to overcome or ameliorate at least one of these disadvantages of the prior art or to provide an alternative to the prior art.

### SUMMARY

Accordingly, the present invention provides in a first aspect a method of forming a chemical gradient on a substrate comprising the steps of:
providing a printing device comprising a body for holding at least one active molecular ink within a body volume of the body, wherein the body comprises a contact surface and the dimension of the body volume transverse to the contact surface is variable; and
contacting the printing device with the substrate.

Typically, in the method of the first embodiment, the amount of active molecular ink applied to the printing device is an amount which is able to form a single self-assembled monolayer or part thereof.

According to a second embodiment of the present invention, there is provided an apparatus for forming a chemical gradient on a substrate comprising:
a printing device comprising a body for holding at least one active molecular ink within a body volume of the body, wherein the body comprises a contact surface and the dimension of the body volume transverse to the contact surface is variable. In a preferred embodiment thereof the apparatus can also comprise a substrate.

According to a third embodiment of the present invention, there is provided a printing device for transferring active molecular ink to a substrate comprising a body volume for holding at least one active molecular ink wherein the body comprises a contact surface and the dimension of the body volume transverse to the contact surface is variable.

Typically, the printing device used in the first, second or third embodiment of the present invention is an elastomeric stamp having a variable height. Typically, the printing device includes a contact surface shaped so as to form a non-linear chemical gradient.

Still typically, the printing device in a preferred form of an elastomeric stamp comprises a wedge-shaped body. However, the body of the elastomeric stamp may also be in the form of other shapes and geometries such as arcuate shaped , concave shaped, convex shaped, triangular shaped, conical shaped, frusto-conical shaped, coil shaped including a coil of increasing / decreasing thickness, parabolic shaped, hyperbolic shaped, sinusoidal shaped, etc.

The printing device used in the first, second or third embodiment of the present invention is typically formed from an elastomeric material, a gel or other material which allows diffusion of the active molecular ink to the substrate. Typically, the gel may be a polymer gel with sufficient mechanical stability so as to be suitable as a material for the printing device of the present invention.

Typically, the elastomeric material which is suitable for the printing device of the present invention is also flexible and is able to adsorb the active molecular ink which is used to form self-assembled monolayers on the substrate. Typically, the elastomeric material includes but is not limited to polymeric materials especially elastomers including silicones and thermoplastic elastomers.

Typically, the silicones useful as an elastomeric material include a polysiloxane and more typically polydimethylsiloxane. An example of a suitable polydimethylsiloxane used as the material for the printing device or elastomeric stamp is Sylgard 184, a commercially available siloxane polymer produced by Dow Coming Corporation.

The active molecular ink used in the first, second or third embodiments of the present invention include those molecular species which are capable of forming a self-assembled monolayer on a substrate. Some typical examples of the active molecular ink in the first, second and third embodiments of the present invention include alkane thiols, dialkyldisulfides, dialkylsulfides, organosilanes, phosphonic acids, phosphates, alcohols, amines, and carboxylic acids. Other typical examples of the active molecular ink include protein molecules, DNA, natural macromolecules, synthetic macromolecules and nanoparticles suspended in a suitable liquid. Some typical examples of alkane thiols used as active molecular inks include dodecane thiol (DDT), hexadecane thiol (HDT), octadecane thiol (ODT) and eicosane thiol (ECT). However, it will be understood by those skilled in the art that other molecular species which are able to form a self-assembled monolayer on a substrate are included within the term "active molecule" or "active molecular ink" as used in the present specification.

The substrates usable in the first, second or third embodiments of the present invention include those substrates which are capable of reacting with an active molecule or active molecular ink so as to form a self-assembled monolayer of the active molecule on the substrate. Some typical examples of the substrate used in the present invention include gold, silver, palladium, platinum, copper, SiO₂, SnO₂, TiO₂ and Al₂O₃, glass slides and polymeric surfaces. However, it will be understood by those skilled in the art that other substrates not specified here which are able to form a self-assembled monolayer by reacting with the active molecular ink of the present invention are included within the term of "substrate" as used in the present invention.

According to a fourth embodiment of the present invention, there is provided a substrate having a chemical gradient which is produced by the method of the first embodiment of the present invention.

### BRIEF DESCRIPTION OF THE DRAWINGS

The present invention will now be described, by way of example only, with reference to the accompanying drawings; in which:
Figure 1 is a side view of a wedge-shaped elastomeric stamp placed on a substrate in accordance with an embodiment of the present invention; and
Figure 2 is a top view of a chemical gradient formed on the substrate after the wedge shaped stamp as shown in Figure 1 has been lifted off the substrate and immersed in a solution containing another active molecular ink to form the chemical gradient.

### DETAILED DESCRIPTION

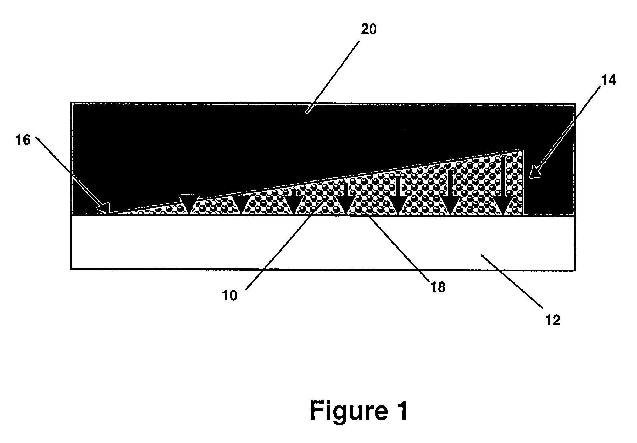

In Figure 1, there is shown a side view of a printing device comprising an elastomeric stamp (10) placed on a gold substrate (12) in accordance with an embodiment of the present invention. The elastomeric stamp (10) has a first end (14) and a second end (16). The thickness of the elastomeric stamp (10) is greater at the first end (14) than at the second end (16) such that the elastomeric stamp (10) has a wedge-shaped body as can be seen in Figure 1. The elastomeric stamp (10) has a stamping surface (18), also referred to as contact surface, which is capable of adsorbing an active molecular ink which in this example is an alkane thiol. The active molecular ink is after absorption held in a body volume that is defined by the volume of the elastomeric stamp (10). Due to the difference in thickness between the first end (14) and the second end (16), the body thickness varies over the contact surface, which hence means that the body volume transverse to the contact surface is variable. The elastomeric stamp (10) further has a backplane (20) attached to one side thereof. The back plane (20) extends upwardly from the substrate (12) as can be seen in Figure 1.

In this example, a first alkane thiol **A** is adsorbed by the elastomeric stamp (10) after the elastomeric stamp (10) is immersed in a solution of the first alkane thiol A (not shown). When the stamping surface (18) of the elastomeric stamp (10) is brought into contact with the gold substrate (12), the first alkane thiol **A** diffuses towards an upper surface of the gold substrate (12) as shown by the direction of arrows in Figure 1. When the first alkane thiol **A** contacts the surface of the gold substrate (12), a spontaneous reaction occurs between the first alkane thiol **A** and the gold substrate (12) to form a self-assembled monolayer or part of a self-assembled monolayer on the upper surface of the gold substrate (12).

The elastomeric stamp (10) is preferably made from a siloxane polymer and still more preferably polydimethylsiloxane. In this example, the elastomeric stamp (10) is formed from Sylgard 184, a commercially available siloxane polymer produced by Dow Coming Corporation.

The amount of alkane thiol carried by the elastomeric stamp (10) controllable in the inking process. In this example, a polydimethylsiloxane inkpad is equilibrated with a certain amount of alkane thiol. Since the diffusion constant of the alkane thiol in the polydimethylsiloxane is known, the amount of ink transferred to the elastomeric stamp (10) is able to precisely calculated and controlled. The preferred alkane thiol used in this example is hexadecane thiol (HDT). Other preferred alkane thiols are dodecane thiol (DDT), octadecane thiol (ODT) and eicosane thiol (ECT).

The variation in height of the wedge-shaped elastomeric stamp (10) as can be seen in Figure 1 creates a concentration gradient, also referred to as chemical gradient, of the alkane thiol **A** on the surface of the gold metal substrate (12). Preferably, the concentration of the alkane thiol **A** is in the mM range, although it can also be higher or lower. The first end (14) of the elastomeric stamp (10) is dimensioned so as to allow approximately the required amount of alkane thiol **A** so as to produce a single self-assembled monolayer on the gold substrate (12). The second end (16) of the elastomeric stamp (10) is dimensioned so as to allow approximately the required amount of alkane thiol **A** so as to produce less than or part of a single monolayer on the gold substrate (12). This results in the first end (14) of the stamp (10) having a greater height than the second end (16) of the stamp (10). The first end (14) of the stamp (10) is preferably between 0.5 µm and 5 mm in height. Preferably, the first end (14) of the stamp (10) has a height between 0.5 µm and 100 µm. The height of the second end (16) of the stamp (10) is between 0 µm and the height of the first end (14) of the stamp (10).

The contacting of the inked elastomeric stamp (10) having variable height to the gold substrate (12) will form an alkane thiol gradient on the surface of the gold substrate (12). Typically, the surface dimensions of the elastomeric stamp (10) are larger than the height of the first end (14) of the stamp (10). This is preferred due to the fact that alkyl thiols will diffuse faster to the metal surface and react with the gold substrate (12) rather than diffuse laterally towards the sides of the stamp (10).

The vacancies on the surface of the substrate (12) are able to be filled up by a second alkane thiol **B** so as to e.g. create a wetting contrast. Also, the vacancies can also be filled up by another reactive thiol which is able to bind protein molecules. In this way, a concentration gradient of proteins is able to be produced on the substrate (12) in a similar manner as described above.

Without being limited to the following examples, preferred as a second alkane thiol **B** are 11-mercapto-1-undecanol, 11-mercaptoundecanoic acid, 16-mercaptohexadecanoic acid, a reactive ester of 11-mercaptoundecanoic acid or the corresponding disulfide, completely or partially fluorinated alkane thiols.

The monolayer of second thiol B may be formed by any process known to one skilled in the art. Without being limited to the following examples, preferred methods are self-assembly of second thiol B from a solution of second thiol B, self-assembly of second thiol B through the vapour phase, self-assembly of second thiol B by printing.

It will also be appreciated by those skilled in the art that the elastomeric stamp (10) may also be formed in any geometrical shape that exhibits a variation in height of the stamp (10) so as to create a concentration gradient of the assembled molecular layer. For example, other suitable shapes include geometries such as arcuate shaped, concave shaped, convex shaped, triangle shaped, a coil of increasing / decreasing thickness, a cone, an inverted cone, parabola, hyperbola, sinusoidal shaped, etc. It will also be appreciated that the different geometrical shapes will lead to a variety of different chemical gradients and thus provides a means to form a chemical gradient of arbitrary geometry on a substrate.

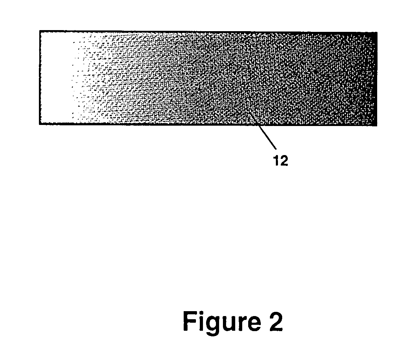

In Figure 2, there is shown a top view of the substrate (12) with a chemical gradient after the wedge shaped stamp (10) as shown in Figure 1 has been lifted off and the substrate (12) has been immersed into a solution of another active molecular ink, specifically an alkane thiol B. There is shown on the substrate (12) a gradient from alkane thiol A (right side of the substrate) to alkane thiol B (left side of the substrate).

The advantages of the method and composition of the present invention are as follows:
- the method and apparatus to form chemical gradients on a substrate of the present invention is believed to be simpler to perform than any known method of the current state of the art.
- the method and apparatus of the present invention relies on a simple printing step and thus does not require any sophisticated equipment.
- the method and apparatus of the present invention is able to produce shapes of gradients other than linear with control over gradient shape and gradient steepness.

The applications of the method and composition of the present invention are in the field of sensors, biosensors, diagnostic kits for the biotechnology and/or pharmaceutical industry. However, any other applications utilising the formation of chemical gradients is relevant to the method and composition of the present invention.

Modifications and variations such as would be apparent to a skilled addressee are deemed to be within the scope of the present invention. It is also understood that the scope of the present invention should not be limited to the examples and figures shown and illustrated above.

## Claims

1. A method of forming a chemical gradient on a substrate comprising the steps of:
providing a printing device comprising a body for holding at least one active molecular ink within a body volume of the body, wherein the body comprises a contact surface and the dimension of the body volume transverse to the contact surface is variable; and
contacting the printing device with the substrate.

2. A method according to claim 1, wherein the contact surface is selected to be shaped so as to form a non-linear chemical gradient.

3. A method according to claim 1 or 2, wherein the shape of the body of the printing device is selected from the group consisting of wedge shaped, conical shaped, triangular shaped, arcuate shaped, concave shaped, convex shaped, frusto-conical shaped, coil shaped, parabolic shaped, hyperbolic shaped and sinusoidal shaped.

4. A method according to any one of claims 1 to 3, wherein the active molecular ink is selected from the group consisting of alkane thiols, organosilanes, dialkylsulfides, dialkyldisulfides, alcohols, amines, carboxylic acids, phosphonic acids, phosphates, protein molecules, DNA, natural macromolecules, synthetic macromolecules and nanoparticles suspended in a liquid.

5. A method according to claim 4, wherein the alkane thiol is selected from the group consisting of dodecane thiol (DDT), hexadecane thiol (HDT), octadecane thiol (ODT) and eicosane thiol (ECT).

6. A method according to any one of claims 1 to 5, wherein the material of the substrate is selected from the group consisting of silver, gold, copper, palladium, platinum, SiO₂, SnO₂, TiO₂, Al₂O₃, glass slides and polymeric surfaces.

7. A method according to any one of claims 1 to 6, wherein the printing device comprises an elastomeric material, preferably polydimethylsiloxane (PDMS).

8. A method according to any one of claims 1 to 7, wherein the printing device comprises a stamp, wherein the body of the stamp is preferably wedge shaped.

9. An apparatus for forming a chemical gradient on a substrate comprising:
a printing device comprising a body for holding at least one active molecular ink within a body volume of the body, wherein the body comprises a contact surface and the dimension of the body volume transverse to the contact surface is variable.

10. An apparatus according to claim 9, wherein the contact surface is shaped so as to form a non-linear chemical gradient.

11. An apparatus according to claim 9 or 10, wherein the shape of the body of the printing device is selected from the group consisting of wedge shaped, conical shaped, triangular shaped, arcuate shaped, concave shaped, convex shaped, frusto-conical shaped, coil shaped, parabolic shaped, hyperbolic shaped and sinusoidal shaped.

12. An apparatus according to any one of claims 9 to 11, wherein the active molecular ink is selected from the group consisting of alkane thiols, organosilanes, dialkylsulfides, dialkyldisulfides, alcohols, amines, carboxylic acids, phosphonic acids, phosphates, protein molecules, DNA, natural macromolecules, synthetic macromolecules and nanoparticles suspended in a liquid.

13. An apparatus according to any one of claims 9 to 12, wherein the printing device comprises an elastomeric material, preferably polydimethylsiloxane (PDMS).

14. An apparatus according to any one of claims 9 to 13, wherein the printing device comprises a stamp that is preferably wedge shaped.

15. A substrate having a chemical gradient produced by the method of any one of claims 1 to 8.
